# EUROPEAN PATENT APPLICATION

(11) **EP 2 784 792 A1**
(43) Date of publication of application: **01.10.2014**
(21) Application number: 11876070.1
(22) Date of filing: 23.11.2011
(51) Int. Cl.: H01G 9/042, H01G 9/20, H01M 14/00

(54) **ACTIVE MATERIAL FOR COUNTER-ELECTRODE, METHOD FOR PREPARING SAME, SOLAR CELL COUNTER-ELECTRODE USING ACTIVE MATERIAL FOR COUNTER-ELECTRODE AND PREPARATION METHOD THEREOF**

(71) Applicant: OCEAN'S KING LIGHTING SCIENCE & TECHNOLOGY CO., LTD., Guangdong 518054 (CN); Shenzhen Ocean's King Lighting Engineering Co. Ltd., Guangdong 518054 (CN)
(72) Inventor: ZHOU, Mingjie, Shenzhen, Guangdong 518054 (CN); WANG, Ping, Shenzhen, Guangdong 518054 (CN); FENG, Xiaoming, Shenzhen, Guangdong 518054 (CN); CHEN, Jixing, Shenzhen, Guangdong 518054 (CN)
(74) Representative: Brunetti, Fabrizio
(86) International application number: PCT/CN2011/082752
(87) International publication number: WO 2013/075303

(57) **Abstract**

Disclosed is an active material for a counter-electrode. The material comprises a carbon aerogel and platinum loaded on the carbon aerogel, the platinum having a mass content of 1% to 5% in the active material for a counter-electrode. The active material for a counter-electrode has a relatively high photoelectric conversion efficiency. In addition, also provides are a method for preparing the active material for a counter-electrode, a solar cell counter-electrode using the active material for a counter-electrode and a method for preparing the solar cell counter-electrode.

## Description

### TECHNICAL FIELD

The present invention relates to the field of capacitors, in particular to an active material for counter-electrode, preparation method thereof, solar cell counter-electrode using said active material for counter-electrode and preparation method thereof.

### BACKGROUND ART

Since 1991, Professor Grätzel from the Institute of Technology of Lausanne, Switzerland, made a breakthrough in the development of the photovoltaic conversion efficiency of a dye-sensitized solar cell making use of nanotechnology for the first time, dye-sensitized solar cells (DSSCs) due to its simple production process, low cost and good application prospect aroused more attention. This type of photovoltaic cell has a production cost of only 1/5∼1/10 of that of the silicon solar cells, but has a service life of up to 20 years or more, and thus has been considered as the most promising solar cell capable of substituting silicon solar cell in the next generation.

Solar cells are typically consisted of the following three parts: a dye-absorbed nanocrystalline TiO₂ photoanode (working electrode), an electrolyte comprising I⁻/I₃⁻ oxidation-reduction pair, and a counter electrode. A counter-electrode is used for collecting electrons from the external circuit of a cell, and for transmitting the electrons rapidly to the electrolyte in a low consuming manner, while catalytically reducing I₃⁻ in the electrolyte. Additionally, any light that have not been absorbed by the working electrode can be reflected back to the working electrode by means of the counter-electrode for undergoing a second absorption, and the absorption efficiency of the solar cell can thus be enhanced. Therefore, as a counter-electrode of DSSCs, a high catalytic activity, a high carrier transport ability and good stability are necessary.

Such materials as porous carbon aerogel and activated carbon have a high specific surface area, which makes more active center available for the catalytic reduction reaction, and thus are suitable for producing the counter-electrode of a dye-sensitized solar cell. However, porous carbon aerogel, activated carbon and the like shows relatively weak catalytic reduction ability on I₃⁻, which renders the photoelectric conversion efficiency of the resulting solar cell relatively low.

### DISCLOSURE OF THE INVENTION

Based on this, it is necessary to provide an active material for counter-electrode having higher photoelectric conversion efficiency and preparation method thereof, a solar cell counter-electrode using said active material for counter-electrode and preparation method thereof.

An active material for counter-electrode, comprising a carbon aerogel and platinum loaded on said carbon aerogel, the mass content of said platinum in said active material for counter-electrode is 1% to 5%.

A method for preparing an active material for counter-electrode, comprising the steps of: step 1: providing a carbon aerogel and a chloroplatinic acid solution, the specific surface area of said carbon aerogel is 200m²/g to 1000 m²/g; step 2: placing said carbon aerogel into said chloroplatinic acid solution and subjecting the same to ultrasonic dispersion such that said chloroplatinic acid is loaded on the surface of said carbon aerogel, the ratio of said carbon aerogel to said chloroplatinic acid solution is 1g:1000ml to 1g:200ml, and then filtering and drying the thus obtained carbon aerogel loaded with chloroplatinic acid; step 3: heating said carbon aerogel loaded with chloroplatinic acid under the protection of an inert gas to decompose said chloroplatinic acid loaded on said carbon aerogel to platinum, so as to obtain the carbon aerogel loaded with platinum; step 4: milling said carbon aerogel loaded with platinum into powder after cooling to obtain the active material for counter-electrode.

In a preferred embodiment, in step 1, the mass concentration of said chloroplatinic acid solution is 3% to 20%.

In a preferred embodiment, in step 2, said carbon aerogel is placed into said chloroplatinic acid solution and the same is subjected to ultrasonic dispersion for 2 hours to 10 hours, said carbon aerogel loaded with chloroplatinic acid is subjected to vacuum-drying under 80°C for 12 hours; in step 3, said inert gas is nitrogen, said carbon aerogel loaded with chloroplatinic acid is heated to 300°C to 450°C under the protection of the inert gas and maintained at this temperature for 5 minutes to 30 minutes.

A solar cell counter-electrode, comprising a conductive substrate and an active layer formed on said conductive substrate, the material of said active layer comprises an active material for counter-electrode, said active material for counter-electrode comprises a carbon aerogel and platinum loaded on said carbon aerogel, the mass content of said platinum in said active material for counter-electrode is 1% to 5%.

In a preferred embodiment, the material of said active layer further comprises an adhesive, the mass ratio of said active material for counter-electrode and said adhesive is 1:0.1 to 1:0.2.

In a preferred embodiment, said adhesive is hydroxymethyl cellulose, ethyl cellulose, polyvinylidene fluoride-hexafluoropropylene copolymer or polytetrafluoroethylene.

A method for preparing a solar cell counter-electrode, comprising the steps of : step 1, providing a carbon aerogel and a chloroplatinic acid solution, the specific surface area of said carbon aerogel is 200m²/g to 1000 m²/g; step 2, placing said carbon aerogel into chloroplatinic acid solution and subjecting the same to ultrasonic dispersion such that chloroplatinic acid is loaded on the surface of said carbon aerogel, the ratio of said carbon aerogel and chloroplatinic acid is 1g:1000ml to 1g: 200mL, and then filtering and drying the obtained carbon aerogel loaded with chloroplatinic acid; step 3, heating said carbon aerogel loaded with chloroplatinic acid under the protection of an inert gas so as to decompose said chloroplatinic acid loaded on said carbon aerogel to platinum, so as to obtain a carbon aerogel loaded with platinum; step 4, milling said carbon aerogel loaded with platinum into powder after cooling to obtain an active material for counter-electrode; step 5, applying said active material for counter-electrode to the surface of said conductive substrate to obtain a solar cell counter-electrode.

In a preferred embodiment, in step 1, the mass content of said chloroplatinic acid solution is 3% to 20%; in step 2, said carbon aerogel is placed into said chloroplatinic acid and the same is subjected to ultrasonic dispersion for 2 hours to 10 hours, said carbon aerogel loaded with chloroplatinic acid is subjected to vacuum-drying under 80°Cfor 12 hours; in step 3, said inert gas is nitrogen, said carbon aerogel loaded with chloroplatinic acid is heated to 300°C to 450°C under the protection of the inert gas and maintained at this temperature for 5 minutes to 30minutes.

In a preferred embodiment, in step 5, said active material for counter-electrode is mixed with an adhesive before applying it to the surface of a conductive substrate, said adhesive is hydroxymethyl cellulose, ethyl cellulose, polyvinylidene fluoride-hexafluoropropylene copolymer or polytetrafluoroethylene, the mass ratio of said active material for counter-electrode and an adhesive is 1:0.1 to 1:0.2.

In said active material for counter-electrode, the carbon aerogel has a relatively good electrical conductivity, and has a high specific surface area, which makes more active centers available for the catalytic reduction reaction, and thus improves the overall catalytic activity; platinum is loaded on the carbon aerogel, which said platinum has a relatively stronger catalytic reduction activity on I₃⁻, such that the cost is reduced by using a carbon aerogel while the catalytic reduction activity of said active material for counter-electrode on I₃⁻ is enhanced, and hence the photoelectric conversion efficiency of a solar cell that employs said active material for counter-electrode is improved.

### BRIEF DESCRIPTION OF THE DRAWING

Figure 1 shows a flowchart of the method for preparing an active material for counter-electrode of one embodiment;
Figure 2 shows a flowchart of the method for preparing a solar cell counter-electrode of one embodiment;
Figure 3 shows schematically the structure of a solar cell prepared as depicted in one embodiment;
Figure 4 shows a curve chart of the current density and the voltage of the solar cells prepared in Example 1, comparative example 1 and comparative example 2.

### DETAILED DESCRIPTION OF THE EMBODIMENTS

Detailed description to an active material for counter-electrode, preparation method thereof, solar cell counter-electrode using said active material for counter-electrode and preparation method thereof will now be given with reference to the drawings and the specific embodiments as set forth below:

In one embodiment, an active material for counter-electrode comprises a carbon aerogel and platinum loaded on a carbon aerogel, the mass content of said platinum in said active material for counter-electrode is 1% to 5%.

The specific surface area of the carbon aerogel is 200m²/g to 1000 m²/g.

In said active material for counter-electrode, the carbon aerogel has a relatively good electrical conductivity, and has a high specific surface area, which makes more active centers available for the catalytic reduction reaction, and thus improves the overall catalytic activity; platinum is loaded on the carbon aerogel, which said platinum has a relatively stronger catalytic reduction activity on I₃⁻, such that the cost is reduced by using a carbon aerogel while the catalytic reduction activity of said active material for counter-electrode on I₃⁻ is enhanced, and hence the photoelectric conversion efficiency of a solar cell that employs said active material for counter-electrode is improved.

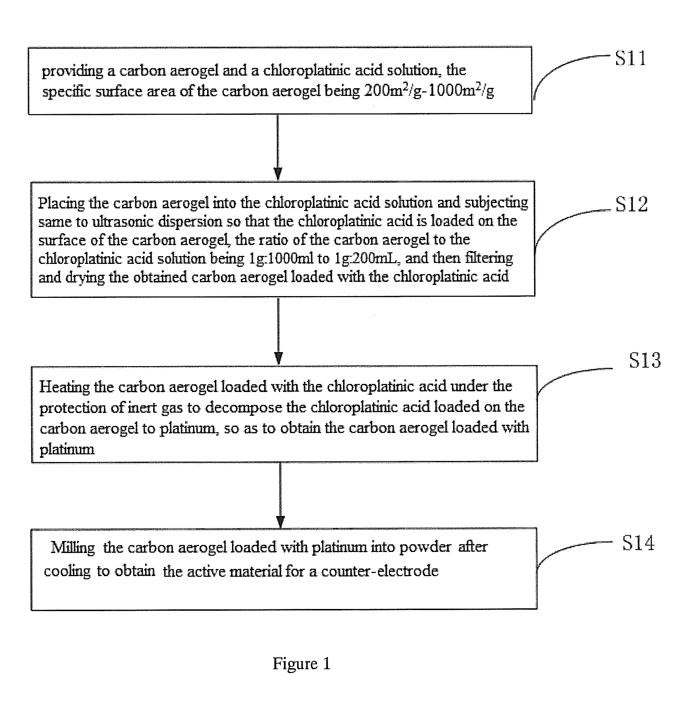

With reference to figure 1, a method for preparing an active material for counter-electrode of one embodiment, comprising the steps of:
Step S11, providing a carbon aerogel and a chloroplatinic acid solution, the specific surface area of said carbon aerogel is 200m²/g to 1000 m²/g.

In the present embodiment, said chloroplatinic acid solution is a solution having a mass concentration of 3% to 20% prepared by dissolving chloroplatinic acid hexahydrate (H₂PtCl₆·6H₂O) in a suitable solvent, the pH value of the solution is adjusted to 8.0-9.5, said solvent is n-butanol, ethylene glycol or isopropanol. Sodium hydrogen carbonate or acetic acid is added for adjusting the pH value of the solution. If a higher pH is desired for the solution, sodium hydrogen carbonate is added while if a lower pH is desired for the solution, acetic acid is added.

Step 12: placing said carbon aerogel into said chloroplatinic acid solution and subjecting the same to ultrasonic dispersion such that said chloroplatinic acid is loaded on the surface of said carbon aerogel, the ratio of said carbon aerogel to said chloroplatinic acid solution is 1g:1000ml to 1g:200ml, and then filtering and drying the obtained carbon aerogel loaded with chloroplatinic acid.

In the present embodiment, said carbon aerogel is placed into said chloroplatinic acid solution and the same is subjected to ultrasonic dispersion for 2 hours to 10 hours, said carbon aerogel loaded with chloroplatinic acid is subjected to vacuum-drying under 80°C for 12 hours after filtration.

Step S13, heating said carbon aerogel loaded with chloroplatinic acid under the protection of an inert gas to decompose said chloroplatinic acid loaded on said carbon aerogel to platinum, so as to obtain the carbon aerogel loaded with platinum.

In the present embodiment, inert gas is nitrogen, said carbon aerogel loaded with chloroplatinic acid is heated to 300°C to 450°C under the protection of the inert gas and maintained at this temperature for 5 minutes to 30 minutes.

Step S14, milling said carbon aerogel loaded with platinum into powder after cooling to obtain the active material for counter-electrode.

In the present embodiment, said carbon aerogel loaded with platinum is milled into powder after cooling to room temperature by means of a ball mill.

The method for preparing said active material for counter-electrode is relatively simple, the thus prepared active material for counter-electrode has a relatively stronger catalytic reduction ability on I₃⁻, and hence the photoelectric conversion efficiency of a solar cell that employs said active material for counter-electrode is improved.

A solar cell counter-electrode of one embodiment, comprising a conductive substrate and an active layer formed on said conductive substrate, the material of said active layer comprises an active material for counter-electrode, said active material for counter-electrode comprises a carbon aerogel and platinum loaded on said carbon aerogel, the mass content of said platinum in said active material for counter-electrode is 1% to 5%.

The specific surface area of said carbon aerogel is 200m²/g to 1000 m²/g.

In the present embodiment, a conductive substrate is a conductive glass or a metallic sheet. The active layer has a thickness of 18µm to 50µm.

In the active material for counter-electrode of said solar cell, said carbon aerogel has a relatively good electrical conductivity, and has a high specific surface area, which makes more active centers available for the catalytic reduction reaction, and thus improves the overall catalytic activity; platinum is loaded on the carbon aerogel, which said platinum has a relatively stronger catalytic reduction activity on I₃⁻, such that the cost is reduced by using a carbon aerogel while the catalytic reduction activity of said active material for counter-electrode on I₃⁻ is enhanced, and hence the photoelectric conversion efficiency of a solar cell that employs said counter-electrode is improved.

Further, the material of said active layer further comprises an adhesive, the mass ratio of said active material for counter-electrode and said adhesive is 1:0.1 to 1:0.2. Said adhesive is hydroxymethyl cellulose, ethyl cellulose, polyvinylidene fluoride-hexafluoropropylene copolymer or polytetrafluoroethylene. In the present embodiment, said active layer is formed by applying said carbon aerogel loaded with platinum having mixed with an adhesive beforehand on said conductive substrate.

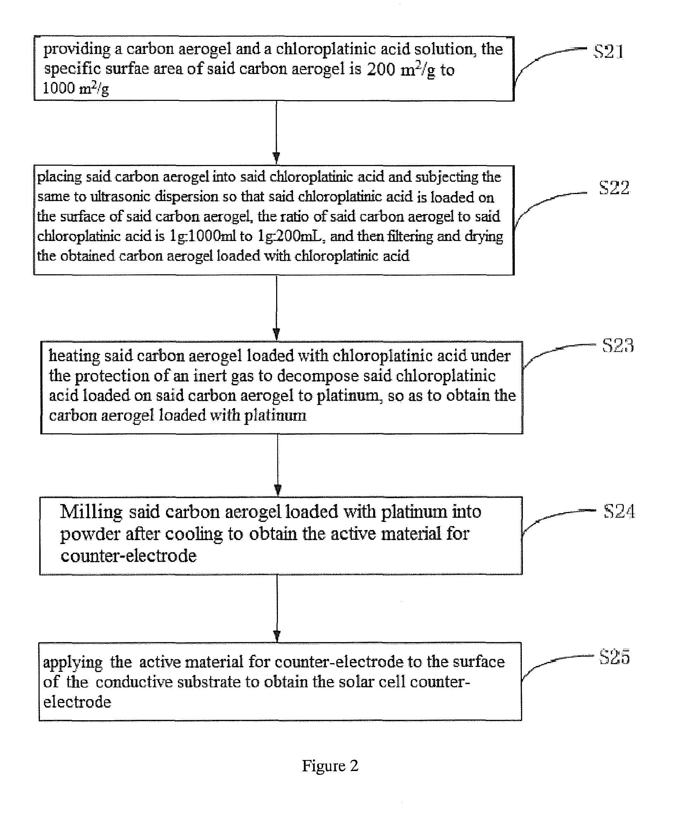

With reference to figure 2, a method for preparing a solar cell counter-electrode of one embodiment, comprising the steps of:
Step S21, providing a carbon aerogel and a chloroplatinic acid solution, the specific surface area of said carbon aerogel is 200m²/g to 1000 m²/g.

In the present embodiment, said chloroplatinic acid solution is a solution having a mass concentration of 3% to 20% prepared by dissolving chloroplatinic acid hexahydrate (H₂PtCl₆·6H₂O) in a suitable solvent, the pH value of the solution is adjusted to 8.0-9.5, said solvent is n-butanol, ethylene glycol or isopropanol. Sodium hydrogen carbonate or acetic acid is added for adjusting the pH value of the solution. If a higher pH is desired for the solution, sodium hydrogen carbonate is added while if a lower pH is desired for the solution, acetic acid is added.

Step S22, placing said carbon aerogel into said chloroplatinic acid solution and subjecting the same to ultrasonic dispersion such that chloroplatinic acid is loaded on the surface of said carbon aerogel, the ratio of said carbon aerogel and chloroplatinic acid is 1g:1000ml to 1g: 200mL, and then filtering and drying the thus obtained carbon aerogel loaded with chloroplatinic acid

In the present embodiment, said carbon aerogel is placed into said chloroplatinic acid solution and the same is subjected to ultrasonic dispersion for 2 hours to 10 hours, said carbon aerogel loaded with chloroplatinic acid is subjected to vacuum-drying under 80°C for 12 hours after filtration.

Step S23, heating said carbon aerogel loaded with chloroplatinic acid under the protection of an inert gas so as to decompose said chloroplatinic acid loaded on said carbon aerogel to platinum, so as to obtain a carbon aerogel loaded with platinum

In the present embodiment, said inert gas is nitrogen, carbon aerogel loaded with chloroplatinic acid is heated to 300°C to 450°C under the protection of the inert gas, and maintained at this temperature for 5 minutes to 30 minutes.

Step S24, milling said carbon aerogel loaded with platinum into powder after cooling to obtain an active material for counter-electrode.

In the present embodiment, said carbon aerogel loaded with platinum is milled into powder after cooling to room temperature by means of a ball mill.

Step S25, applying said active material for counter-electrode to the surface of said conductive substrate to obtain a solar cell counter-electrode.

In the present embodiment, an active material for counter-electrode is applied on the surface of the conductive substrate to form an active layer having a thickness of 18µm to 50µm.

Also, the active layer further comprises an adhesive, the mass ratio of a carbon aerogel and an adhesive is 1:0.1 to 1:0.2. Said adhesive is hydroxymethyl cellulose, ethyl cellulose, polyvinylidene fluoride-hexafluoropropylene copolymer or polytetrafluoroethylene. Said adhesive is formed by dissolving hydroxymethyl cellulose in ethanol, dissolving ethyl cellulose in ethanol, dissolving polyvinylidene fluoride-hexafluoropropylene copolymer in N-methyl pyrrolidone, forming polytetrafluoroethylene into a suspension emulsion using ethanol as the dispersing agent. Among these, the mass concentration of hydroxymethyl cellulose, ethyl cellulose, polyvinylidene fluoride-hexafluoropropylene copolymer is 2%, the mass concentration of polytetrafluoroethylene is 6%. In the preparation, the active material for counter-electrode and the adhesive are mixed at a mass ratio of 1:0.1 to 1:0.2, the mixture is applied over the surface of the conductive substrate by means of knife coating after being stirred evenly, followed by vacuum-drying at 50°C for 10 hours to obtain the solar cell counter-electrode.

The method for preparing said solar cell counter-electrode is relatively simple, the thus prepared active material for counter-electrode has a relatively stronger catalytic reduction ability on I₃⁻, and hence the photoelectric conversion efficiency of a solar cell that employs said active material for counter-electrode is improved.

Once the solar cell counter-electrode is prepared, a titanium dioxide photoanode is made superposing with the counter-electrode, followed by filling with electrolyte after sealing, by which a solar cell is assembled. In particular, the titanium dioxide photoanode is prepared as follows: applying the nano-sized titanium dioxide colloid over the conductive substrate by way of knife coating or printing, followed by calcination at an elevated temperature, and then immersing the titanium dioxide photoanode into a dye solution for 24 hours to absorb photosensitive dyes.

In the followings, specific embodiments are exemplified.

### Example 1

1g of a carbon aerogel was placed into 200mL of 3% (in mass concentration) chloroplatinic acid solution in isopropanol, the specific surface area of the carbon aerogel is 200m²/g, the pH value of the solution was adjusted to 9, and the solution was subjected to ultrasonic dispersion for 10 hours, and then filtered, the filter cake was subjected to vacuum-drying under 80°C for 12 hours. It was then placed into a tubular furnace, and was heated to 80°C under the protection of N₂, and maintained at this temperature for 20 minutes, so that the chloroplatinic acid was decomposed to platinum, and was then milled into powder after cooling to room temperature.

Ethyl cellulose was dissolved in ethanol, followed by addition of the thus prepared carbon aerogel loaded with platinum, in which the mass ratio of the carbon aerogel and ethyl cellulose is 1:0.1. After mixing evenly, the mixture was applied over the surface of the fluorine-doped tin oxide (FTO) conductive glass by means of knife coating, which was then subjected to vacuum-drying at 50°C for 10 hours, to obtain an active layer having a thickness of 18µm.

The above-prepared counter-electrode and a dye-absorbed nano-sized titanium dioxide photoanode were sealed, and then filled with electrolyte, by which a dye-sensitized solar cell is assembled.

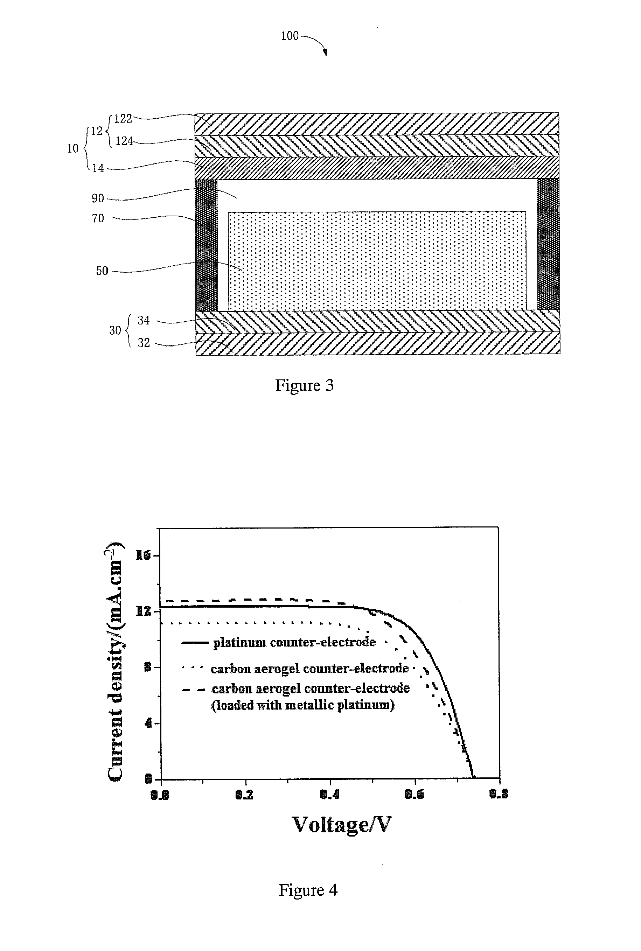

With reference to figure 3, figure 3 shows schematically the structure of a solar cell thus prepared, in which the solar cell 100 comprises a counter-electrode 10, a photoanode 30, a sealing material 50, a porous semiconductor film 70 and an electrolyte 90. The counter-electrode comprises a conductive substrate 12 and an active layer 14 formed on the conductive substrate 12. The conductive substrate 12 comprises a substrate 122 and a conductive film 124 applied over the substrate 122. The photoanode 30 comprises a substrate 32 and a conductive film 34 applied over the substrate 32. The photoanode 30 and the counter-electrode 10 are alternatively arranged and parallel to each other. The porous semiconductor film 70 is provided at one side of the photoanode 30 proximal to the counter-electrode 10. The sealing material 50 is provided at the edge of the photoanode 30 and the counter-electrode 10 to seal the photoanode 30 and the counter-electrode 10. The electrolyte 90 is accommodated in an enclosure space defined by the photoanode 30, the counter-electrode 10 and the sealing material 50.

### Example 2

1g of a carbon aerogel was placed into 500mL of 5% (in mass concentration) chloroplatinic acid solution in isopropanol, the specific surface area of the carbon aerogel is 450m²/g, the pH value of the solution was adjusted to 9.5, and the solution was subjected to ultrasonic dispersion for 8 hours, and then filtered, the filter cake was subjected to vacuum-drying under 80°C for 12 hours. It was then placed into a tubular furnace, and was heated to 400°C under the protection of N₂, and maintained at this temperature for 20 minutes, so that the chloroplatinic acid was decomposed to platinum, and then milled into powder after cooling to room temperature.

Hydroxymethyl cellulose was dissolved in n-butanol, followed by addition of the thus prepared carbon aerogel loaded with platinum, in which the mass ratio of the carbon aerogel and hydroxymethyl cellulose is 1:0.15. After mixing evenly, the mixture was applied over the surface of the fluorine-doped tin oxide (FTO) conductive glass by means of knife coating, which was then subjected to vacuum-drying at 50°C for 10 hours, to obtain an active layer having a thickness of 15µm.

The above-prepared counter-electrode and a dye-absorbed nano-sized titanium dioxide photoanode were sealed, and then filled with electrolyte, by which a dye-sensitized solar cell is assembled.

### Example 3

1g of a carbon aerogel was placed into 1000mL of 10% (mass concentration) chloroplatinic acid solution in isopropanol, the specific surface area of the carbon aerogel is 1000m²/g, the pH value of the solution was adjusted to 8, and the solution was subjected to ultrasonic dispersion for 5 hours, and then filtered, the filter cake was subjected to vacuum-drying under 80°C for 10 hours. It was then placed into a tubular furnace, and was heated to 300°C under the protection of N₂, and maintained at this temperature for 30 minutes, so that the chloroplatinic acid was decomposed to platinum, and then milled into powder after cooling to room temperature.

Polyvinylidene fluoride-hexafluoropropylene copolymer was dissolved in N-methylpyrrolidone, followed by addition of the thus prepared carbon aerogel loaded with platinum, in which the mass ratio of the carbon aerogel and polyvinylidene fluoride-hexafluoropropylene copolymer is 1:0.1. After mixing evenly, the mixture was applied over the surface of a stainless steel metallic sheet by means of knife coating, which was then subjected to vacuum-drying at 50°C for 10 hours, to obtain an active layer having a thickness of 35µm.

The above-prepared counter-electrode and a dye-absorbed nano-sized titanium dioxide photoanode were sealed, and then filled with electrolyte, by which a dye-sensitized solar cell is assembled.

### Example 4

1g of a carbon aerogel was placed into 800mL of 20% (mass concentration) chloroplatinic acid solution in ethylene glycol, the specific surface area of the carbon aerogel is 600m²/g, the pH value of the solution was adjusted to 8.5, and the solution was subjected to ultrasonic dispersion for 2 hours, and then filtered, the filter cake was subjected to vacuum-drying under 80°C for 10 hours. It was then placed into a tubular furnace, and was heated to 450°C under the protection of N₂, and maintained at this temperature for 5 minutes, so that the chloroplatinic acid was decomposed to platinum, and then milled into powder after cooling to room temperature.

The thus prepared carbon aerogel loaded with platinum was added into the emulsion of polytetrafluoroethylene (PTFE), in which the mass ratio of the polytetrafluoroethylene and the carbon aerogel is 1:0.2. After mixing evenly, the mixture was applied over the surface of a stainless steel metallic sheet by means of knife coating, which was then subjected to vacuum-drying at 50°C for 10 hours, to obtain an active layer having a thickness of 50µm.

The above-prepared counter-electrode and a dye-absorbed nano-sized titanium dioxide photoanode were sealed, and then filled with electrolyte, by which a dye-sensitized solar cell is assembled.

### Comparative example 1

The solar cell prepared in comparative example 1 and the solar cell prepared in Example 1 are about the same, the difference lies in: the carbon aerogel of the counter-electrode of comparative example 1 is not loaded with platinum.

### Comparative example 2

The solar cell prepared in comparative example 2 and the solar cell prepared in Example 1 are about the same, the difference lies in: in comparative example 2, the counter-electrode was prepared as follows: chloroplatinic acid hexahydrate (H₂PtCl₆·6H₂O) was dissolved in isopropanol and formed into a solution having a mass concentration of 3%; then by means of spin coating, chloroplatinic acid was spin-coated on the clean surface of a conductive glass, which was then dried at 40°C, and subjected to spin-coating and drying again after drying, and the processes were repeated four times. Then, it was placed in a muffle furnace at 400°C, baked for 20 minutes, and was taken out after cooling, by which a platinum-plated counter-electrode was prepared.

**Table 1**

| | Short circuit current (mA/cm²) | Open circuit voltage (V) | Fill factor | Conversion efficiency (%) |
|---|---|---|---|---|
| Example 1 | 12.74 | 0.74 | 0.71 | 6.69 |
| Example 2 | 12.25 | 0.74 | 0.72 | 6.52 |
| Example 3 | 11.95 | 0.73 | 0.71 | 6.19 |
| Example 4 | 11.67 | 0.74 | 0.70 | 6.05 |
| Comparative Example 1 | 11.15 | 0.74 | 0.70 | 5.78 |
| Comparative Example 2 | 12.36 | 0.74 | 0.73 | 6.68 |

With reference to figure 4 and table 1, figure 4 shows the current density-voltage characteristic curves of the solar cells prepared in Example 1, comparative example 1 and comparative example 2. Table 1 shows the photovoltaic performance data of the solar cells prepared in Examples 1-4 and comparative examples 1-2. From figure 4 and table 1, it is apparent that as the counter-electrode prepared using a carbon aerogel loaded with platinum of the present invention is assembled into a solar cell, the photovoltaic performance data thus obtained from the solar cells is closed to or even superior to the solar cells prepared using a platinum-plated electrode while the performance is significantly higher than a carbon aerogel counter-electrode without loaded with platinum. It is due to the strong catalytic ability of the plenty amount of platinum loaded on the carbon aerogel, the relatively high specific surface area of the carbon aerogel renders more catalytic active centers available, and hence improves the catalytic reduction ability of the counter-electrode on I₃⁻, which facilitates the improvement of the photoelectric conversion efficiency; further, in the present invention, the materials for a carbon aerogel come from a variety of sources and of low prices.

Although the present invention has been described and illustrated in detail, it is clearly understood that the same is by way of illustrating the preferred embodiment of the present invention and is not to be taken by way of limitation. It will be understood by those skilled in the art that various modifications, equivalent replacements and improvements may be made therein without departing from the spirit and scope of the invention as defined by the appended claims. The present invention should be in the scope of the appended claims prevail.

## Claims

1. An active material for counter-electrode, comprising a carbon aerogel, **characterized in that** said active material for counter-electrode further comprises platinum loaded on said carbon aerogel, the mass content of said platinum in said active material for counter-electrode is 1% to 5%.

2. A method for preparing an active material for counter-electrode, **characterized in that**, comprising the steps of:
step 1: providing a carbon aerogel and a chloroplatinic acid solution, the specific surface area of said carbon aerogel being 200m²/g to 1000 m²/g;
step 2: placing said carbon aerogel into said chloroplatinic acid solution and subjecting the same to ultrasonic dispersion so that said chloroplatinic acid is loaded on the surface of said carbon aerogel, the ratio of said carbon aerogel to said chloroplatinic acid solution being 1g:1000ml to 1g:200ml, and then filtering and drying the obtained carbon aerogel loaded with chloroplatinic acid;
step 3: heating said carbon aerogel loaded with chloroplatinic acid under the protection of an inert gas to decompose said chloroplatinic acid loaded on said carbon aerogel to platinum, so as to obtain a carbon aerogel loaded with platinum;
step 4: milling said carbon aerogel loaded with platinum into powder after cooling to obtain said active material for counter-electrode.

3. A method for preparing the active material for counter-electrode according to claim 2, **characterized in that**, in step 1, said chloroplatinic acid solution has a mass concentration of 3% to 20%.

4. A method for preparing the active material for counter-electrode according to claim 2, **characterized in that**, in step 2, said carbon aerogel is placed into said chloroplatinic acid solution and the same is subjected to ultrasonic dispersion for 2 hours to 10 hours, said carbon aerogel loaded with chloroplatinic acid is subjected to vacuum-drying under 80°C for 12 hours; in step 3, said inert gas is nitrogen, said carbon aerogel loaded with chloroplatinic acid is heated to 300°C to 450°C under the protection of an inert gas and maintained at this temperature for 5 minutes to 30 minutes.

5. A solar cell counter-electrode, comprising a conductive substrate and an active layer formed on said conductive substrate, the material of said active layer comprises an active material for counter-electrode, said active material for counter-electrode comprises a carbon aerogel, **characterized in that**, said active material for counter-electrode further comprises platinum loaded on said carbon aerogel, the mass content of said platinum in said active material for counter-electrode is 1% to 5%.

6. The solar cell counter-electrode according to claim 5, **characterized in that**, the material of said active layer further comprises an adhesive, the mass ratio of said active material for counter-electrode and said adhesive being 1:0.1 to 1:0.2.

7. The solar cell according to claim 5, **characterized in that**, said adhesive is hydroxymethyl cellulose, ethyl cellulose, polyvinylidene fluoride-hexafluoropropylene copolymer or polytetrafluoroethylene.

8. A method for preparing of a solar cell counter-electrode, comprising the steps of:
step 1: providing a carbon aerogel and a chloroplatinic acid solution, the specific surface area of said carbon aerogel is 200 m²/g to 1000 m²/g;
step 2: placing said carbon aerogel into said chloroplatinic acid and subjecting the same to ultrasonic dispersion so that said chloroplatinic acid is loaded on the surface of said carbon aerogel, the ratio of said carbon aerogel to said chloroplatinic acid is 1g:1000ml to 1g:200mL, and then filtering and drying the obtained carbon aerogel loaded with chloroplatinic acid;
step 3: heating said carbon aerogel loaded with chloroplatinic acid under the protection of an inert gas to decompose said chloroplatinic acid loaded on said carbon aerogel to platinum, so as to obtain the carbon aerogel loaded with platinum;
step 4: milling said carbon aerogel loaded with platinum into powder after cooling to obtain the active material for counter-electrode;
step 5: applying said active material for counter-electrode to the surface of said conductive substrate to obtain the solar cell counter-electrode.

9. The method for preparing of a solar cell counter-electrode according to claim 8, **characterized in that**, in step 1, the mass content of said chloroplatinic acid solution is 3% to 20%; in step 2, said carbon aerogel is placed into said chloroplatinic acid solution and the same is subjected to ultrasonic dispersion for 2 hours to 10 hours, said carbon aerogel loaded with chloroplatinic acid is subjected to vacuum-drying under 80°C for 12 hours; in step 3, said inert gas is nitrogen, said carbon aerogel loaded with chloroplatinic acid is heated to 300°C to 450°C under the protection of an inert gas and maintained at this temperature for 5 minutes to 30minutes.

10. The method for preparing of a solar cell counter-electrode according to claim 8, **characterized in that**, in step 5, said active material for counter-electrode is mixed with an adhesive before applying to the surface of said conductive substrate, said adhesive is hydroxymethyl cellulose, ethyl cellulose, polyvinylidene fluoride-hexafluoropropylene copolymer or polytetrafluoroethylene, the mass ratio of said active material for counter-electrode and said adhesive is 1:0.1 to 1:0.2.
